# EUROPEAN PATENT APPLICATION

(11) **EP 4 462 293 A1**
(43) Date of publication of application: **13.11.2024**
(21) Application number: 22918637.4
(22) Date of filing: 07.01.2022
(51) Int. Cl.: G06F 21/55, G06N 20/00

(54) **GENERATION METHOD, GENERATION PROGRAM, AND INFORMATION PROCESSING DEVICE**

(71) Applicant: Fujitsu Limited, Kawasaki-shi, Kanagawa 211-8588 (JP)
(72) Inventor: YAJIMA, Jun, Kawasaki-shi, Kanagawa 211-8588 (JP)
(74) Representative: Hoffmann Eitle
(86) International application number: PCT/JP2022/000325
(87) International publication number: WO 2023/132048

(57) **Abstract**

Provided are a generation method, a generation program, and an information processing device that improve security of a machine learning system. Tree structure information representing a structure of an attack tree including a first node associated with information indicating an attack to be established and second nodes associated with conditions to establish the attack, difficulty level information indicating difficulty of response to make the conditions associated with the respective second nodes unsatisfied, and condition matching status information that indicates whether the second nodes are satisfied are received, and, for each non-establishment condition candidate being a combination by which the attack is not established among combinations of the conditions associated with the respective second nodes, provision information that indicates a priority of adoption of the non-establishment condition candidate is generated based on the tree structure information, the difficulty level information, and the condition matching status information.

## Description

### FIELD

The present disclosure relates to a generation method, a generation program, and an information processing device.

### BACKGROUND

A technology of estimating predetermined information and recognizing various objects based on given data by artificial intelligence (AI) is known. In particular, there is high attention to AI implemented by machine learning. Hereinafter, a system that performs estimation and recognition using a training model generated by machine learning is referred to as a machine learning system. There is a risk that various attacks are applied to AI implemented by such a machine learning system.

For example, there is an attack referred to as an adversarial example. This is an attack that adds cleverly calculated noise to an original image to create an image that is recognized as an object similar to the original image by a human but is recognized as another object by the machine learning system, and intentionally causes AI to perform erroneous estimation. For example, it is possible to add noise to an image of a panda to generate an image that looks like a panda to a human but is determined as a gibbon when classification is performed using the machine learning system. In addition, there are various methods for attacks on the machine learning system.

In this way, the machine learning system is exposed to many risks due to various attacks. Thus, at the time of development of the machine learning system, it is important to analyze security to determine what kind of attack may be applied to the machine learning system, and to consider response.

As the response to an attack in the machine learning system, when the countermeasures are roughly divided, two methods may be considered including a method of changing a specification and a method of applying a countermeasure dedicated to the attack to the machine learning system. The method of changing a specification is a method of changing a specification of the machine learning system so that the attack may not be made because the attack on the machine learning system is closely related to the specification. Furthermore, as the method of applying a countermeasure dedicated to the attack to the machine learning system, there are a method of retraining the training model so that the attack is unlikely to succeed, a method of implementing an attack detection method to mitigate damage, and the like. Here, a countermeasure against an adversarial attack by changing the specification of the machine learning system will be considered among these.

Here, as a security analysis method in general Internet technology (IT) security, there is a method referred to as attack tree analysis. The attack tree analysis is performed in the following procedure. A tree is constructed in which possible damage to a system to be attacked is set as a top node at the highest level and which is branched downward from there. By setting, for each node, a branch and a leaf in consideration of a condition under which the node is established, downward branches are set to generate an attack tree. When the branches and the leaves are determined, a condition under which the attack tree is not established is specified, so that a specification of the system may be changed such that the attack tree is not established. As a result, the system having resistance to the attack that causes assumed damage may be generated.

A general attack tree is in a state where a structure is not determined at the beginning, and information regarding each node and branch is set after the specification is determined. On the other hand, types of attacks and damages on the machine learning system are limited. Therefore, in a case where the attack tree analysis is performed on the machine learning system, it is possible to generate an attack tree in which information regarding each node and branch is registered before the specification of the machine learning system is determined. Therefore, the machine learning system may determine whether or not each attack is established by generating the attack tree in advance and checking a condition registered in each node and the specification in comparison.

Note that, as a technology regarding security of a system, there is a technology of extracting, from attack route information representing an attack procedure, combinations of attack actions to be addressed, calculating an evaluation value based on a usability level of a countermeasure candidate for each attach action and an importance level of a combination of attack actions, and determining a countermeasure for each combination of attack actions. Furthermore, there is a technology of generating information indicating accessibility to a trained model from predetermined information regarding the machine learning system and obtaining a possibility of an attack based on the generated information and information indicating an operability of a query or the trained model. Furthermore, there is a technology of generating an attack tree, assigning a probability of success of an attack to each node, and calculating and providing a final probability of the attack. Furthermore, there is a technology of generating an attack tree, calculating a score of an attack based on an influence of the attack, and ranking the attack according to the score.

### SUMMARY

### TECHNICAL PROBLEM

However, in an attack tree for the machine learning system, when the attack tree is constructed for each attack, there is often an overlap of subtrees representing a small hierarchy including branches and leaves, such as presence of an attack tree of another attack inside an attack tree for a certain attack, and a nested structure is formed. Furthermore, nodes having the same content are often present in a plurality of subtrees. Moreover, as the specification, it may be difficult to make a condition of a specific node unsatisfied. For example, in a case where there is a node having content of outputting a result to a user, it is meaningless as a system to make this node non-established, and thus it is difficult to make a condition of this node unsatisfied. Since the attack tree for the machine learning system has complicated features as described above, it is difficult in the general attack tree analysis technology to prioritize and present which condition is appropriate to be made unsatisfied. Therefore, it is difficult to determine an appropriate change in the specification as a countermeasure against an attack, and it is difficult to improve security of the machine learning system.

Furthermore, in a case where the technologies described above are used, it is possible to obtain evaluation for an attack, or the like, but it is difficult to prioritize and present a condition for making an attack tree for a countermeasure against the attack non-established. Therefore, it is difficult to determine an appropriate change in the specification as a countermeasure against an attack, and it is difficult to improve the security of the machine learning system.

The disclosed technology has been made in view of the above, and an object thereof is to provide a generation method, a generation program, and an information processing device that improve security of a machine learning system.

### SOLUTION TO PROBLEM

In one aspect of a generation method, a generation program, and an information processing device disclosed in the present application, tree structure information that represents a structure of an attack tree that includes a first node associated with information that indicates an attack to be established and a plurality of second nodes hierarchically coupled to the first node and associated with conditions to establish the attack, difficulty level information that indicates difficulty of response to make the conditions associated with the respective plurality of second nodes unsatisfied, and condition matching status information that indicates whether or not the plurality of second nodes is satisfied are received, and, for each non-establishment condition candidate that is a combination by which the attack is not established among combinations of the conditions associated with the respective plurality of second nodes, provision information that indicates a priority of adoption of the non-establishment condition candidate is generated based on the tree structure information, the difficulty level information, and the condition matching status information.

### ADVANTAGEOUS EFFECTS OF INVENTION

In one aspect, the present invention may improve security of a machine learning system.

### BRIEF DESCRIPTION OF DRAWINGS

FIG. 1 is a block diagram of an information processing device.
FIG. 2 is a diagram illustrating an example of an attack tree.
FIG. 3 is a diagram illustrating an example of tree structure information.
FIG. 4 is a diagram illustrating an example of condition matching status information.
FIG. 5 is a diagram illustrating an example of difficulty level information.
FIG. 6 is a diagram illustrating an example of a prioritized specification change candidate list.
FIG. 7 is a diagram illustrating a specific example of the attack tree.
FIG. 8 is a diagram illustrating an example of input information.
FIG. 9 is a diagram illustrating development of a logical expression negating a highest-level attack achievement condition for an adversarial example condition.
FIG. 10 is a diagram for describing decomposition of the logical expression.
FIG. 11 is a diagram for describing omission of redundant expression of the logical expression.
FIG. 12 is a diagram for describing extraction of non-establishment condition candidates for a poisoning condition.
FIG. 13 is a diagram for describing integration of the non-establishment condition candidates.
FIG. 14 is a diagram for describing development of the non-establishment condition candidates after the integration.
FIG. 15 is a diagram illustrating final non-establishment condition candidates.
FIG. 16 is a diagram in which the condition matching status information is added to the attack tree.
FIG. 17 is a diagram illustrating updated scores to be calculated.
FIG. 18 is a diagram for describing calculation of a priority determination score of each non-establishment condition candidate.
FIG. 19 is a diagram illustrating a specific example of the prioritized specification change candidate list.
FIG. 20 is a flowchart of processing of generating the prioritized specification change candidate list by the information processing device according to an embodiment.
FIG. 21 is a hardware configuration diagram of the information processing device.

### DESCRIPTION OF EMBODIMENTS

Hereinafter, an embodiment of a generation method, a generation program, and an information processing device disclosed in the present application will be described in detail with reference to the drawings. Note that the following embodiment does not limit the generation method, the generation program, and the information processing device disclosed in the present application.

### [First Embodiment]

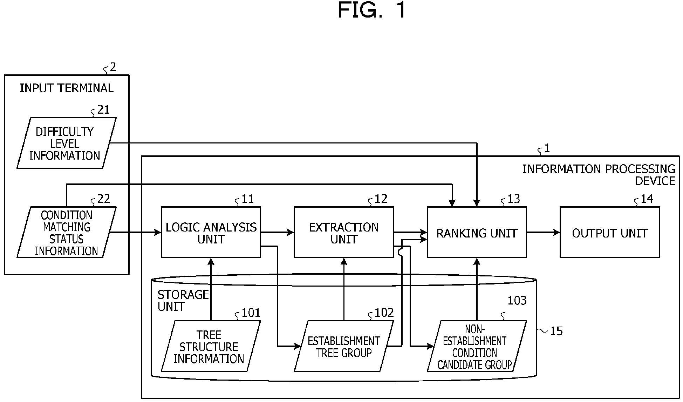

FIG. 1 is a block diagram of an information processing device. An information processing device 1 according to the present embodiment includes a logic analysis unit 11, an extraction unit 12, a ranking unit 13, an output unit 14, and a storage unit 15.

The storage unit 15 stores tree structure information 101, an establishment tree group 102, and a non-establishment condition candidate group 103. The storage unit 15 may be used from each unit of the logic analysis unit 11, the extraction unit 12, and the ranking unit 13.

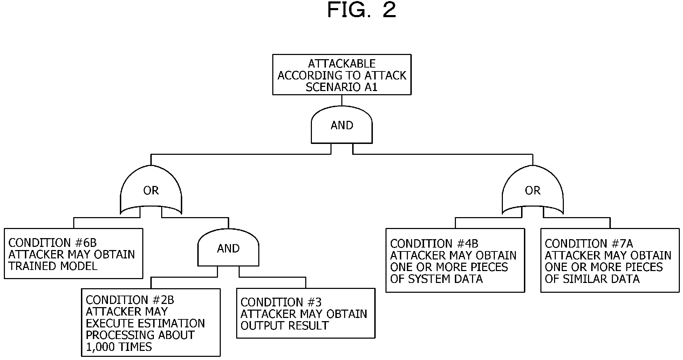

The tree structure information 101 is information representing a tree structure of an attack tree for a machine learning system whose specification is to be changed in order to prevent an attack. FIG. 2 is a diagram illustrating an example of the attack tree. The attack tree illustrated in FIG. 2 is an attack tree in a case where the machine learning system is attacked according to an attack scenario A1.

Hereinafter, one attack tree may be referred to as a "tree". Furthermore, the attack tree in FIG. 2 includes a plurality of second nodes in which the respective conditions #2B, #3, #4B, #6B, and #7A for achieving the attack according to the attack scenario A1 indicated by a first node at the highest level are described. Furthermore, the attack tree includes a node including, as content, achievement of another attack scenario included in the attack tree. Hereinafter, the second nodes in which the conditions for achieving the attack described in the first node at the highest level of the attack tree are described and the node including, as the content, achievement of another attack scenario included in the attack tree are referred to as "leaves". Furthermore, a logical symbol representing a relationship between the respective conditions is referred to as a "branch". The second nodes that are the leaves are hierarchically coupled to the first node by the branches. Furthermore, a collection of branches and leaves extending downward from a node including, as content, achievement of a specific attack scenario included in the attack tree is referred to as a "subtree". In other words, the subtree may also be considered as an attack tree for a specific attack described at the highest level of the subtree.

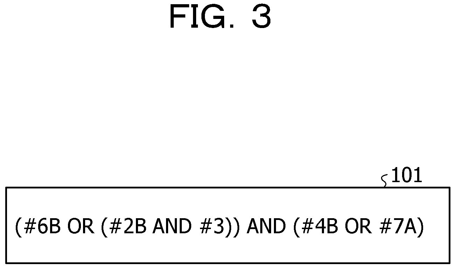

The tree structure information 101 is a logical expression obtained by coupling the conditions described in the respective leaves using logical conditions indicated by the branches. For example, the tree structure information 101 representing the attack tree in FIG. 2 is represented by a logical expression illustrated in FIG. 3 when respective conditions are represented by logical signs. FIG. 3 is a diagram illustrating an example of the tree structure information. Since an attack tree for the machine learning system may be created in advance, the tree structure information 101 is created in advance, input to the information processing device 1, and stored in the storage unit 15. Since there may be one attack tree or a plurality of attack trees, one or more pieces of the tree structure information 101 are created in accordance with the number of attack trees and stored in the storage unit 15.

Furthermore, the establishment tree group 102 is a set obtained by collecting the tree structure information 101 of an attack tree in which an attack at the highest level of the attack tree is established. The establishment tree group 102 is generated by the logic analysis unit 11 and stored in the storage unit 15.

The non-establishment condition candidate group 103 is a set obtained by collecting non-establishment condition candidates that are candidates for a combination of conditions that are made unsatisfied in order not to achieve an attack at the highest level of an attack tree. The non-establishment condition candidate group 103 is generated by the extraction unit 12 and stored in the storage unit 15.

The logic analysis unit 11 acquires the tree structure information 101 of each attack tree from the storage unit 15. Moreover, the logic analysis unit 11 acquires condition matching status information 22 input by an input terminal 2.

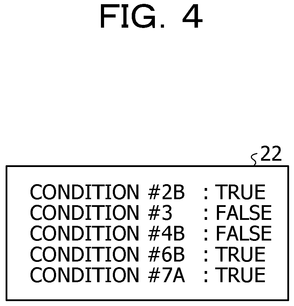

FIG. 4 is a diagram illustrating an example of the condition matching status information. For example, as illustrated in FIG. 4, the condition matching status information 22 for the attack tree in FIG. 2 stores information indicating whether or not each of the conditions #2B, #3, #4B, #6B, and #7A is satisfied in the current specification of the machine learning system. The condition matching status information 22 in FIG. 4 represents that the conditions #2B, #4B, and #6B are satisfied and the conditions #3 and #7A are not satisfied.

Returning to FIG. 1, the description will be continued. The logic analysis unit 11 determines, from the tree structure information 101 of each attack tree and the condition matching status information 22, a status of establishment of the attack tree indicating whether or not the attack indicated by the first node at the highest level in each attack tree is achieved and the attack tree is established. For example, in a case where input of the condition matching status information 22 illustrated in FIG. 4 is received for the attack tree in FIG. 2, the logic analysis unit 11 determines that the attack tree illustrated in FIG. 2 is established because the condition #6B is satisfied and the condition #7A is satisfied. Then, the logic analysis unit 11 extracts the tree structure information 101 in which the attack tree is established, and collectively stores the tree structure information 101 as the establishment tree group 102 in the storage unit 15. Thereafter, the logic analysis unit 11 notifies the extraction unit 12 of completion of generation of the establishment tree group 102.

The extraction unit 12 receives the notification of the completion of the generation of the establishment tree group 102 from the logic analysis unit 11. Then, the extraction unit 12 acquires each piece of the tree structure information 101 included in the establishment tree group 102 from the storage unit 15. Next, the extraction unit 12 generates, from the acquired tree structure information 101, a logical expression representing a condition for making the attack tree represented by the tree structure information 101 non-established. Next, the extraction unit 12 decomposes the logical expression into individual logical expressions including only AND, and generates non-establishment condition candidates that are candidates for the condition as a minimum unit that makes the attack tree non-established. The non-establishment condition candidates are conditions under which the original attack tree is made non-established in a case where any one of the non-establishment condition candidates is satisfied. In a case where there is a plurality of attack trees, the extraction unit 12 integrates the non-establishment condition candidates of each attack tree to generate non-establishment condition candidates for making all the attack trees non-established. Thereafter, the extraction unit 12 causes the storage unit 15 to store the non-establishment condition candidate group 103 including the generated non-establishment condition candidates. Moreover, the extraction unit 12 notifies the ranking unit 13 of completion of extraction of the non-establishment condition candidate group 103.

For example, in a case where the tree structure information 101 illustrated in FIG. 3 is used, the extraction unit 12 generates a logical expression negating the entire logical expression of the tree structure information 101 illustrated in FIG. 3. Then, from the generated logical expression, the extraction unit 12 generates ((to #6B)&((to #2B)|(to 3)))|((to #4B)&(to 7A)) as a logical expression representing a condition for making the attack tree illustrated in FIG. 2 non-established. Here, "to" represents negation (NOT) of the condition. Moreover, the extraction unit 12 decomposes this logical expression into logical expressions as a minimum unit coupled by AND to generate three of to #6B and to #2B, to #6B and to #3, to #4B and to 7A. The extraction unit 12 sets these three logical expressions as the non-establishment condition candidates. In other words, when any one of the three non-establishment condition candidates is satisfied, the attack tree illustrated in FIG. 2 is made non-established.

Returning to FIG. 1, the description will be continued. The ranking unit 13 receives, from the extraction unit 12, the notification of the completion of the extraction of the non-establishment condition candidate group 103. Next, the ranking unit 13 acquires difficulty level information 21 input from the input terminal 2.

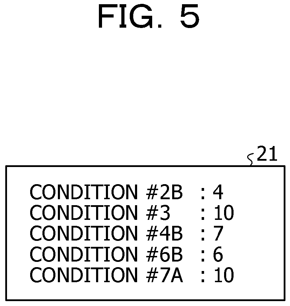

FIG. 5 is a diagram illustrating an example of the difficulty level information. The difficulty level information 21 is information representing, for each condition, how difficult it is to make a condition written in each leaf unsatisfied. In the present embodiment, a difficulty level is represented in ten stages, and it is assumed that the greater the number, the more difficult it is. For example, in the case of the difficulty level information illustrated in FIG. 5, it is very difficult to make the conditions to be unsatisfied for the conditions #3 and #7A. On the other hand, for the condition #2B, it is relatively easy to make the condition unsatisfied. Hereinafter, a value of the difficulty level for each condition is referred to as a difficulty parameter.

Returning to FIG. 1, the description will be continued. Next, the ranking unit 13 acquires the establishment tree group 102 from the storage unit 15. Moreover, the ranking unit 13 acquires the condition matching status information 22 input from the input terminal 2.

Next, the ranking unit 13 develops all the attack trees included in the establishment tree group 102, and counts the number of leaves in which the same condition is described and the condition is satisfied except for a subtree that is not established. In other words, the ranking unit 13 does not include, in the number, leaves of a non-established attack tree and subtree, and a leaf in which the condition is not satisfied even in the established attack tree. Hereinafter, the number of leaves in which the same condition is described and the condition is satisfied is referred to as "the number of the same leaves".

Next, the ranking unit 13 stores, for each condition, a value obtained by dividing 1 by the number of the same leaves as a basic score of the condition described in those leaves. For example, in a case where there are three leaves in which the same condition is described and the condition is satisfied in an established attack tree, the ranking unit 13 calculates a basic score of the condition as 1/3. In this way, as the number of overlaps of a condition increases, the ranking unit 13 may lower a basic score of the condition.

Next, the ranking unit 13 multiplies, for each condition, the basic score by the difficulty parameter and calculates an updated score for each condition. In other words, the updated score becomes lower as the number of the same leaves for the condition increases, and becomes higher as difficulty of making the condition unsatisfied increases. For example, when the number of the same leaves is 5 and the difficulty parameter is 4 for a certain condition, the ranking unit 13 calculates an updated score of the condition as (1/5) × 4 = 4/5. Furthermore, when the number of the same leaves is 2 and the difficulty parameter is 7 for another condition, the ranking unit 13 calculates an updated score of the condition as (1/2) × 7 = 7/2. The ranking unit 13 calculates updated scores for all the conditions included in the established attack tree.

Next, the ranking unit 13 acquires the non-establishment condition candidate group 103 from the storage unit 15. Then, the ranking unit 13 calculates a priority determination score for each non-establishment condition candidate by using the updated score of each condition included in each non-establishment condition candidate. At this time, the ranking unit 13 uses the calculated updated score of each condition as a negative score of each condition. Furthermore, for "and (AND)", the ranking unit 13 calculates the priority determination score of the non-establishment condition candidate by adding the updated score. For example, a case will be described where NOT(condition P), NOT(condition Q), and NOT(condition R) constitute a non-establishment condition candidate, and updated scores of the condition P, the condition Q, and the condition R are 2, 4/5, and 4, respectively. In this case, the ranking unit 13 calculates a priority determination score of the non-establishment condition candidate as 2 + 4/5 + 4 = 6.8. At this time, the ranking unit 13 sets the updated score to 0 for a condition that is already not satisfied.

Thereafter, the ranking unit 13 sorts the non-establishment condition candidates in ascending order from those with low priority determination scores and arranges the non-establishment condition candidates in priority order. Then, the ranking unit 13 outputs information regarding the non-establishment condition candidates sorted in the priority order to the output unit 14.

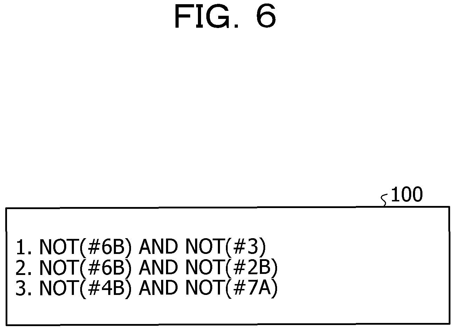

The output unit 14 acquires, from the ranking unit 13, input of the information regarding the non-establishment condition candidates arranged in the priority order. Then, the output unit 14 generates and outputs a prioritized specification change candidate list 100 illustrated in FIG. 6 by arranging the non-establishment condition candidates by adding priorities in the order of arrangement. FIG. 6 is a diagram illustrating an example of the prioritized specification change candidate list. For example, the output unit 14 displays the prioritized specification change candidate list 100 on a monitor or the like, performs prioritization and presents to a user which condition is preferably made unsatisfied.

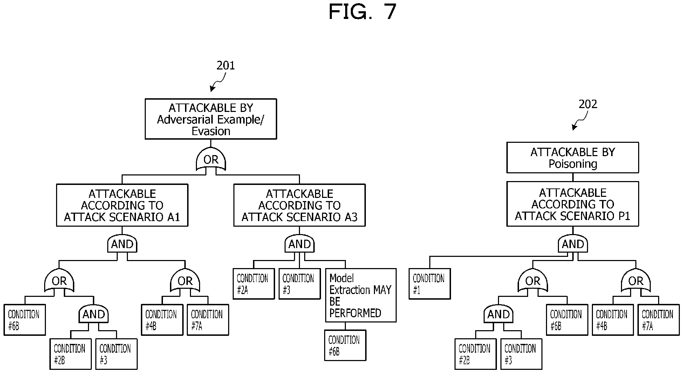

Next, the entire processing of calculating the priority determination score by the information processing device 1 according to the present embodiment will be described using a specific example. FIG. 7 is a diagram illustrating a specific example of the attack tree. Here, a case will be described where there are two attack trees 201 and 202.

The attack tree 201 represents a condition of an attack by an adversarial example/evasion. The attack tree 201 has eight leaves in which the condition #2A, #2B, #3, #4B, #6B, or #7A is described. An attack tree 202 represents a condition of an attack by poisoning. The attack tree 202 has six leaves in which the conditions #1, #2B, #3, #4B, #6B, and #7A are described.

The condition #1 is a condition that "an attacker may execute training processing". The condition #2A is a condition that "an attacker may execute estimation processing about once or more". The condition #2B is a condition that "an attacker may execute estimation processing more than 1000 times". The condition #3 is a condition that "an attacker may obtain an output result". The condition #4B is a condition that "an attacker may obtain one or more pieces of system data". The condition #6B is a condition that "an attacker may obtain the trained model of the machine learning system". The condition #7A is a condition that "an attacker may obtain one or more pieces of similar data".

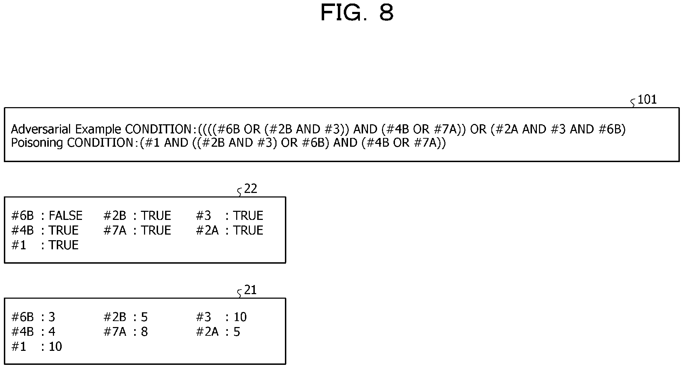

FIG. 8 is a diagram illustrating an example of input information. The information processing device 1 acquires the tree structure information 101, the difficulty level information 21, and the condition matching status information 22 illustrated in FIG. 8.

In this case, as illustrated in FIG. 8, the tree structure information 101 includes a logical expression of an adversarial example condition representing a structure of the attack tree 201 and a logical expression of a poisoning condition representing a structure of the attack tree 202.

Furthermore, the difficulty level information 21 includes difficulty parameters of the conditions #1, #2A, #2B, #3, #4B, #6B, and #7A described in the leaves of the attack trees 201 and 202. The difficulty parameter of the condition #1 is 10. Furthermore, the difficulty parameter of the condition #2A is 5. Furthermore, the difficulty parameter of the condition #2B is 5. Furthermore, the difficulty parameter of the condition #3 is 10. Furthermore, the difficulty parameter of the condition #4B is 4. Furthermore, the difficulty parameter of the condition #6B is 3. Furthermore, the difficulty parameter of the condition #7A is 8.

Furthermore, the condition matching status information 22 includes condition matching statuses of the conditions #1, #2A, #2B, #3, #4B, #6B, and #7A described in the leaves of the attack trees 201 and 202. The condition #1 is satisfied. Furthermore, the condition #2A is satisfied. Furthermore, the condition #2B is satisfied. Furthermore, the condition #3 is satisfied. Furthermore, the condition #4B is satisfied. Furthermore, the condition #6B is not satisfied. Furthermore, the condition #7A is satisfied.

The logic analysis unit 11 determines that both the attack trees 201 and 202 are established using the tree structure information 101 and the condition matching status information 22, and stores the tree structure information 101 illustrated in FIG. 2 including both tree structures as the establishment tree group 102.

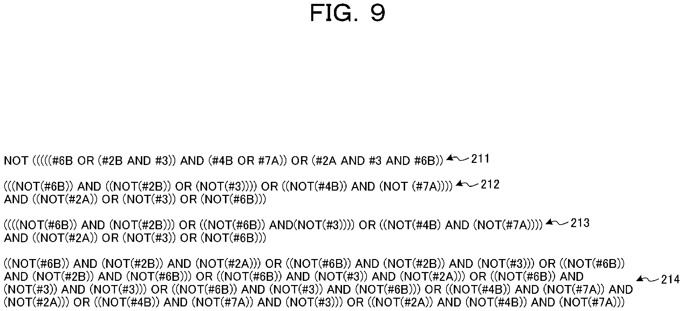

The extraction unit 12 acquires the logical expression of the adversarial example condition among the two logical expressions registered in the establishment tree group 102. FIG. 9 is a diagram illustrating development of a logical expression negating a highest-level attack establishment condition for the adversarial example condition. The extraction unit 12 generates a logical expression 211 illustrated in FIG. 9, which negates the entire acquired logical expression. Next, the extraction unit 12 generates a logical expression 212 representing a condition for establishing the logical expression 211. Next, the extraction unit 12 develops the logical expression 212 to generate a logical expression 213. The extraction unit 12 further develops the logical expression 213 to generate a logical expression 214. As a result, the development of the logical expression negating the adversarial example condition is completed.

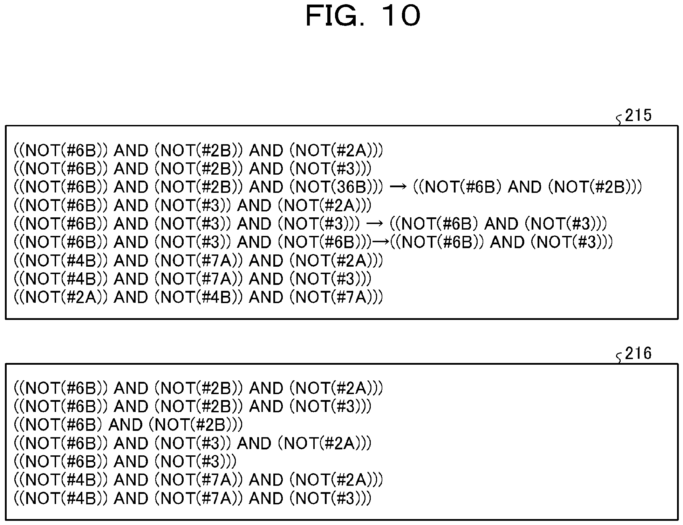

FIG. 10 is a diagram for describing decomposition of the logical expression. Next, the extraction unit 12 decomposes the logical expression 214, for which the development in FIG. 9 has been completed, so as to be divided by OR to obtain individual logical expressions as illustrated in a logical expression group 215 in FIG. 10. Here, in a case where the same condition is included in logical expressions coupled by AND, the extraction unit 12 combines the conditions into one. Next, the extraction unit 12 combines the same logical expressions among the logical expressions obtained by the decomposition into one to obtain a logical expression group 216. As a result, the decomposition of the developed logical expression is completed.

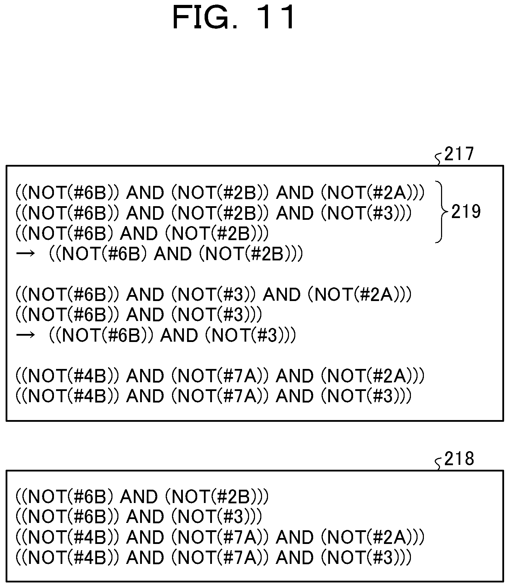

FIG. 11 is a diagram for describing omission of redundant expression of the logical expression. Next, as illustrated in a logical expression group 217, in a case where AND is added after the same conditional expression, a condition after AND is considered as a redundant condition, and thus the extraction unit 12 combines the logical expressions into a logical expression obtained by removing the condition after AND.

For example, in three logical expressions 219 in the logical expression group 217, (NOT(#6B))AND(NOT(#2B)) is the same. In this case, when (NOT(#6B))AND(NOT(#2B)) is established, the original logical expression is negated no matter whether the condition coupled by the subsequent AND is successful or not. In other words, the three logical expressions 219 are all included in the logical expression of (NOT(#6B))AND(NOT(#2B)). Thus, the extraction unit 12 combines the three logical expressions 219 into the logical expression of (NOT(#6B))AND(NOT(#2B)). In this way, the extraction unit 12 generates a logical expression group 218 by omitting the redundant expression in the logical expression group 216 in FIG. 10.

Conditions indicated by four logical expressions included in the logical expression group 218 are non-establishment condition candidates for the adversarial example condition. In other words, an attack by an adversarial example/evasion may be avoided by establishing any one of the four logical expressions included in the logical expression group 218.

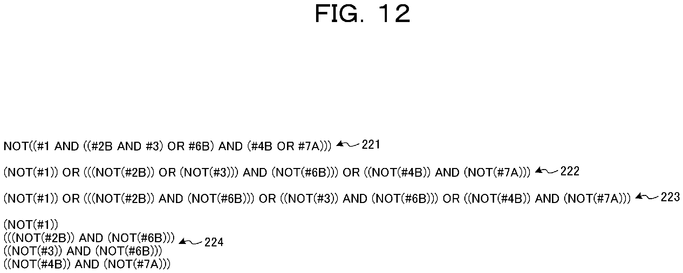

Next, the extraction unit 12 acquires the logical expression of the poisoning condition among the two logical expressions registered in the establishment tree group 102. FIG. 12 is a diagram for describing extraction of non-establishment condition candidates for the poisoning condition. The extraction unit 12 generates a logical expression 221 illustrated in FIG. 12, which negates the entire acquired logical expression. Next, the extraction unit 12 generates a logical expression 222 for establishing the logical expression 221. Next, the extraction unit 12 develops the logical expression 222 to generate a logical expression 223. Next, the extraction unit 12 generates a logical expression group 224 by decomposing the logical expression 223 and omitting redundant expressions if any.

Conditions indicated by four logical expressions included in the logical expression group 224 are non-establishment condition candidates for the poisoning condition. In other words, an attack by poisoning may be avoided by establishing any one of the four logical expressions included in the logical expression group 224.

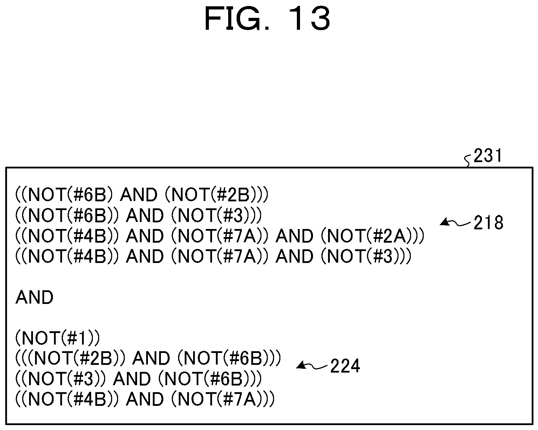

Moreover, the extraction unit 12 integrates the non-establishment condition candidates for the adversarial example condition indicated by the logical expression group 218 and the non-establishment condition candidates for the poisoning condition indicated by the logical expression group 224. FIG. 13 is a diagram for describing integration of the non-establishment condition candidates. The extraction unit 12 integrates the non-establishment condition candidates by coupling the logical expression group 218 and the logical expression group 224 by AND as illustrated in a logical expression group 231 in FIG. 13.

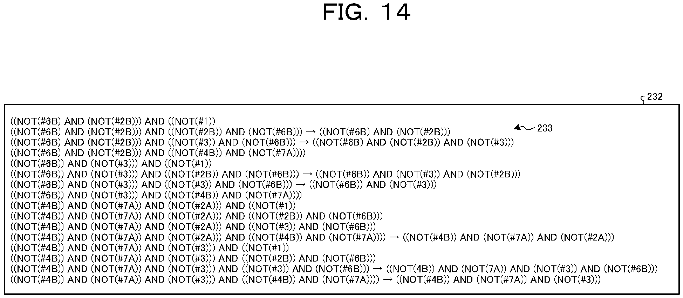

FIG. 14 is a diagram for describing development of the non-establishment condition candidates after the integration. Next, the extraction unit 12 generates all combinations of each logical expression of the logical expression group 218 and the logical expression group 224 in the logical expressions illustrated in FIG. 13, and couples the logical expressions by AND in each combination to execute development of the integrated non-establishment condition candidates. As a result, the extraction unit 12 generates a logical expression group 232 illustrated in FIG. 14. At this time, the extraction unit 12 combines logical expressions indicating the same condition into one, as indicated in a logical expression 233. Moreover, the extraction unit 12 executes omission of redundant expression.

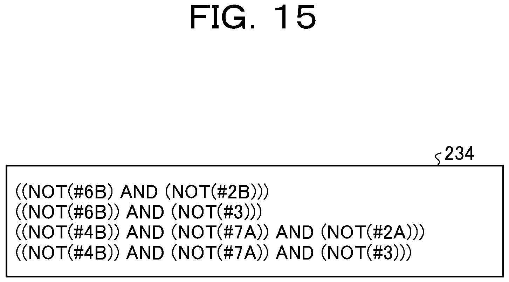

FIG. 15 is a diagram illustrating final non-establishment condition candidates. By performing the above processing, the extraction unit 12 calculates a logical expression group 234 illustrated in FIG. 15. Conditions indicated by four logical expressions included in the logical expression group 234 are non-establishment condition candidates for the adversarial example condition and the poisoning condition. In other words, both an attack by an adversarial example and an attack by poisoning may be avoided by establishing any one of the four logical expressions included in the logical expression group 234. The extraction unit 12 stores the four logical expressions included in the logical expression group 234 in the storage unit 15 as the non-establishment condition candidate group 103.

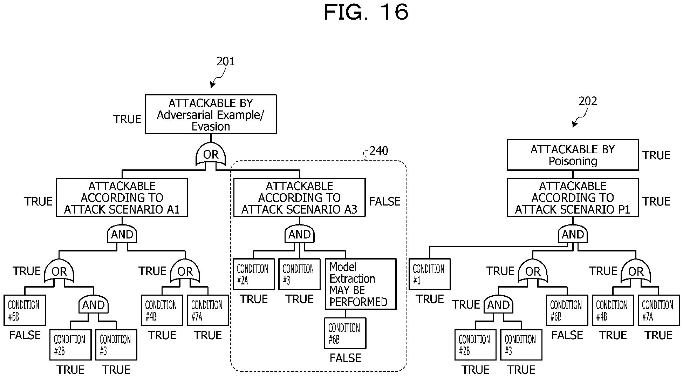

The ranking unit 13 combines the tree structure and the condition matching status information included in the establishment tree group 102. FIG. 16 is a diagram in which the condition matching status information is added to the attack tree. In this case, both the attack trees 201 and 202 are established. Thus, when the condition matching statuses of the respective leaves and branches of each of the attack trees 201 and 202 are added, the attack trees 201 and 202 are represented as illustrated in FIG. 16. In FIG. 16, in a case where there is a leaf above a branch, the condition matching status is added to the leaf.

Since a subtree 240 of the attack tree 201 is not established, the ranking unit 13 removes the subtree 240 from the count of the number of the same leaves. Then, the ranking unit 13 counts the number of the same leaves in the attack trees 201 and 202. Here, the ranking unit 13 sets the number of leaves of the condition #1 to 1, the number of leaves of the condition #2A to 0, the number of leaves of the condition #2B to 2, the number of leaves of the condition #3 to 2, the number of leaves of the condition #4B to 2, the number of leaves of the condition #6B to 0, and the number of leaves of the condition #7A to 2. Next, the ranking unit 13 calculates a basic score of each condition from the counted number of the same leaves. Here, the ranking unit 13 sets the basic score of the condition #1 to 1, the basic score of the condition #2A to 0, the basic score of the condition #2B to 1/2, the basic score of the condition #3 to 1/2, the basic score of the condition #4B to 1/2, the basic score of the condition #6B to 0, and the basic score of the condition #7A to 1/2.

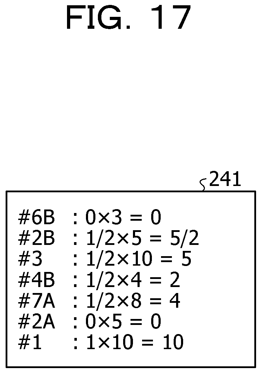

Then, the ranking unit 13 calculates an updated score of each condition by multiplying each difficulty parameter included in the difficulty level information 21 by the basic score. FIG. 17 is a diagram illustrating updated scores to be calculated. Here, the ranking unit 13 calculates the updated score of each condition as indicated by updated scores 241. The updated score of the condition #1 is 10. Furthermore, the updated score of the condition #2A is 0. Furthermore, the updated score of the condition #2B is 5/2. Furthermore, the updated score of the condition #3 is 5. Furthermore, the updated score of the condition #4B is 2. Furthermore, the updated score of the condition #6B is 0. Furthermore, the updated score of the condition #7A is 4.

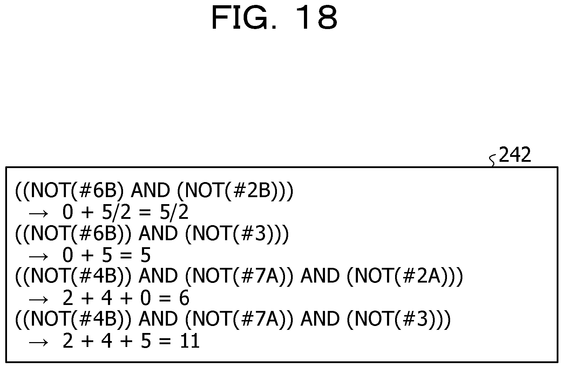

FIG. 18 is a diagram for describing calculation of a priority determination score of each non-establishment condition candidate. Next, the ranking unit 13 calculates a priority determination score of each non-establishment condition candidate as indicated by priority determination scores 242 in FIG. 18 using the updated scores of the conditions calculated for each non-establishment condition candidate included in the non-establishment condition candidate group 103 represented by the logical expression group 234 in FIG. 15. For example, a non-establishment condition candidate of ((NOT(#6B)AND(NOT(#2B))) will be described as an example. In this case, since the updated score of NOT(#6B) is 0 and the updated score of NOT(#2B) is 5/2, the ranking unit 13 calculates a priority determination score as 0 + 2/5 = 5/2. Here, the ranking unit 13 uses the updated score of each condition instead of the already calculated score as a condition for negating.

The ranking unit 13 sorts the non-establishment condition candidates indicated by the logical expression group 234 in FIG. 15 in ascending order from those with low priority determination scores that have been calculated. Then, the ranking unit 13 outputs information regarding the sorted non-establishment condition candidates to the output unit 14.

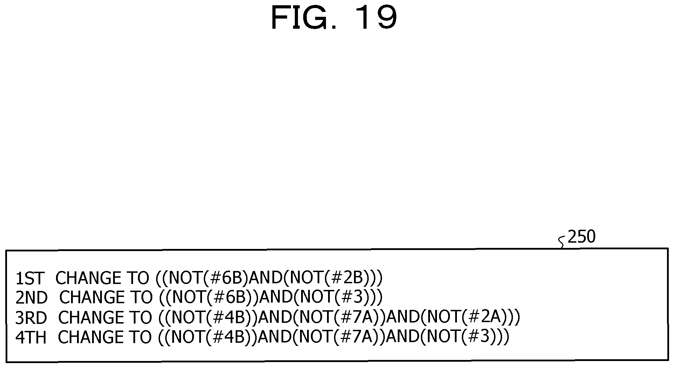

FIG. 19 is a diagram illustrating a specific example of the prioritized specification change candidate list. The output unit 14 generates a prioritized specification change candidate list 250 in which the respective non-establishment condition candidates sorted according to the priorities are arranged with the order added. Here, the output unit 14 represents the priority as the order. Furthermore, the output unit 14 generates the prioritized specification change candidate list 250 by adding words that urge change in the specification to each non-establishment condition candidate. The output unit 14 provides the generated prioritized specification change candidate list 250 to a user.

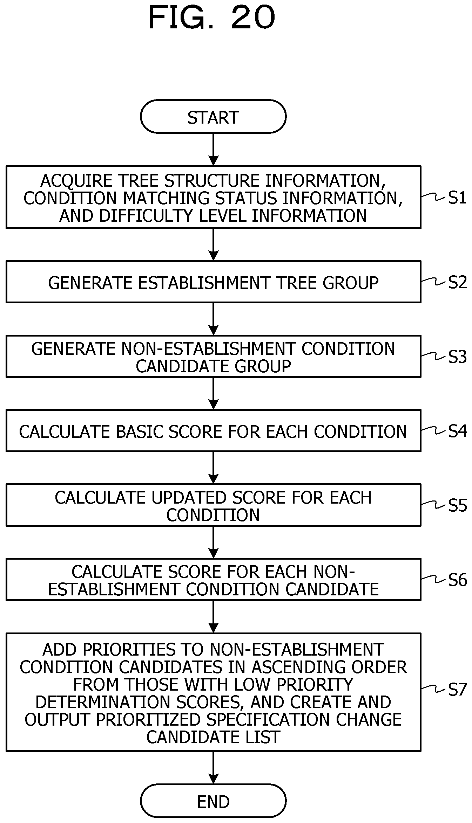

FIG. 20 is a flowchart of processing of generating the prioritized specification change candidate list by the information processing device according to the embodiment. Next, a flow of the processing of generating the prioritized specification change candidate list by the information processing device 1 will be described with reference to FIG. 20.

The information processing device 1 acquires the tree structure information 101 in advance and stores the tree structure information 101 in the storage unit 15. Furthermore, the information processing device 1 acquires the difficulty level information 21 and the condition matching status information 22 input from the input terminal 2 (step S1).

Next, the logic analysis unit 11 specifies attack trees to be established using the tree structure information 101 and the condition matching status information 22, and generates the establishment tree group 102 including the tree structure information 101 of each of the attack trees to be established (step S2). The logic analysis unit 11 stores the establishment tree group 102 in the storage unit 15.

Next, the extraction unit 12 generates the non-establishment condition candidate group 103 including each non-establishment condition candidate for making the attack trees to be established non-established using the tree structure information 101 included in the establishment tree group 102 (step S3). The extraction unit 12 stores the non-establishment condition candidate group 103 in the storage unit 15.

The ranking unit 13 acquires the tree structure information 101 included in the establishment tree group 102. Then, the ranking unit 13 counts the number of the same leaves in the tree structure information 101, and calculates a basic score for each condition (step S4).

Next, the ranking unit 13 acquires a difficulty parameter of each condition registered in the difficulty level information 21, and calculates an updated score for each condition using the difficulty parameter and the basic score (step S5).

Next, the ranking unit 13 acquires the non-establishment condition candidate group 103, and calculates a priority determination score for each non-establishment condition candidate by using the updated score of each condition (step S6). Thereafter, the ranking unit 13 sorts the non-establishment condition candidates in ascending order from those with low priority determination scores, and adds priorities in order from the top. Then, the ranking unit 13 outputs, to the output unit 14, information regarding the non-establishment condition candidates sorted in ascending order from those with low priority determination scores.

The output unit 14 acquires, from the ranking unit 13, input of the information regarding the non-establishment condition candidates sorted in ascending order from those with low priority determination scores. Then, the output unit 14 creates the prioritized specification change candidate list illustrated in FIG. 6 by arranging the non-establishment condition candidates with the priorities added in the sort order. Thereafter, the output unit 14 outputs the prioritized specification change candidate list and provides the prioritized specification change candidate list to a user (step S7).

Here, in the present embodiment, the difficulty parameter is different for each condition, but the difficulty parameter may be the same for each condition. In that case, the ranking unit 13 may rank the non-establishment condition candidates by the basic scores without using the updated scores.

Furthermore, although the difficulty level information 21 has been described as being input from the input terminal 2, the information processing device 1 may acquire the difficulty level information 21 in advance, store the difficulty level information 21 as a calculation table in the storage unit 15, and calculate updated scores using the calculation table.

Furthermore, in a case where there are a large number of combinations of conditions that are non-establishment condition candidates for the non-establishment condition candidate group 103, the extraction unit 12 may evaluate updated scores in units of each tree or each subtree, and exclude those having a large score before combining. Since the non-establishment condition candidates are extracted for each attack and finally combined by AND and integrated, the number of non-establishment condition candidates greatly increases by the final integration. Thus, before the final integration, the extraction unit 12 excludes a tree and a subtree whose scores clearly increase and priorities decrease. As a result, it is possible to prevent that the number of combinations of conditions that are non-establishment condition candidates greatly increases.

Furthermore, the ranking unit 13 may exclude a non-establishment condition candidate including a condition in which the basic score is 0 in the prioritized specification change candidate list to be finally output. Furthermore, the ranking unit 13 may evaluate the priority determination score of the non-establishment condition candidate by excluding the condition in which the basic score is 0 from the expression. This is because the non-establishment condition candidate may be simplified by excluding the condition in which the basic score is 0.

In addition, the ranking unit 13 performs division by the number of leaves at the time of calculating the basic score in the present embodiment, but another calculation method may be used as long as the basic score may be calculated such that the score becomes higher as the number of leaves is smaller. Furthermore, also for the updated score, the ranking unit 13 may use a calculation method other than the multiplication of the difficulty parameter and the basic score as long as the updated score may be calculated in such a way that those with the smaller number of leaves and those with the smaller difficulty level are given priority. Furthermore, derivation of the non-establishment condition candidates does not necessarily need to be modified so as to be minimized. In other words, the ranking unit 13 may calculate the priority determination score and create the specification change candidate list while maintaining redundant expression.

As described above, the information processing device according to the present embodiment extracts non-establishment condition candidates for preventing all attacks using tree structure information of attack trees assuming attacks on a machine learning system. Then, the information processing device calculates a score of each non-establishment condition candidate using condition matching status information representing establishment or non-establishment of each leaf and difficulty level information such that the score becomes higher as there are many overlaps, and such that the score becomes higher as it is easy to lead to non-establishment, determines priorities of the non-establishment condition candidates, and notifies a user of the priorities. As the number of overlaps increases, an attack may be more easily prevented by changing one specification, and the more likely the specification leads to non-establishment, the more likely the specification is to be changed. Thus, the user may grasp the change in the specification that is easy to take countermeasures against the attack. Therefore, it is possible to efficiently select response to the attack, it is easy to prevent the attack on the machine learning system, and it is possible to improve security of the machine learning system.

### (Hardware Configuration)

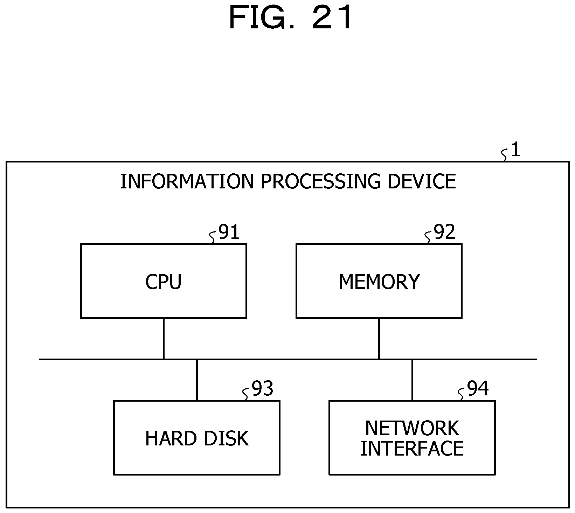

FIG. 21 is a hardware configuration diagram of the information processing device. The information processing device 1 described in the above embodiment may be implemented by a hardware configuration as in FIG. 21. For example, the information processing device 1 includes a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the information processing device 1 and an external device. The network interface 94 relays, for example, communication between the CPU 91 and the input terminal 2.

The hard disk 93 is an auxiliary storage device. The hard disk 93 implements the function of the storage unit 15 exemplified in FIG. 1. Furthermore, the hard disk 93 stores various programs including a program for implementing the functions of the logic analysis unit 11, the extraction unit 12, the ranking unit 13, and the output unit 14 exemplified in FIG. 1.

The memory 92 is a main storage device. The memory 92 is, for example, a dynamic random access memory (DRAM).

The CPU 91 reads various programs stored in the hard disk 93, develops the programs in the memory 92, and executes the programs. As a result, the CPU 91 implements the functions of the logic analysis unit 11, the extraction unit 12, the ranking unit 13, and the output unit 14 exemplified in FIG. 1.

### CITATION LIST

### PATENT DOCUMENT

Patent Document 1: International Publication Pamphlet No. WO 2018/134909
Patent Document 2: Japanese Laid-open Patent Publication No. 2021-60872
Patent Document 3: U.S. Patent Application Publication No. 2009/0113549
Patent Document 4: U.S. Patent No. 10749890

### REFERENCE SIGNS LIST

- 1: Information processing device
- 2: Input terminal
- 11: Logic analysis unit
- 12: Extraction unit
- 13: Ranking unit
- 14: Output unit
- 15: Storage unit
- 21: Difficulty level information
- 22: Condition matching status information
- 101: Tree structure information
- 102: Establishment tree group
- 103: Non-establishment condition candidate group

## Claims

1. A generation method implemented by a computer to execute processing comprising:
receiving tree structure information, difficulty level information, and condition matching status information, the tree structure information being information that represents a structure of an attack tree that includes a first node associated with information that indicates an attack to be established and a plurality of second nodes hierarchically coupled to the first node and associated with conditions to establish the attack, the difficulty level information being information that indicates difficulty of response to make the conditions associated with the respective plurality of second nodes unsatisfied, the condition matching status information being information that indicates whether or not the plurality of second nodes is satisfied; and
generating, for each non-establishment condition candidate of a plurality of non-establishment condition candidate each of which is a combination by which the attack is not established among combinations of the conditions associated with the respective plurality of second nodes, provision information that indicates a priority of adoption of the non-establishment condition candidate based on the tree structure information, the difficulty level information, and the condition matching status information.

2. The generation method according to claim 1, further comprising:
a logical expression that indicates the tree structure information
obtaining individual logical expressions coupled by a logical product by developing and decomposing a logical expression that indicates the tree structure information; and
set the individual logical expression as the non-establishment condition candidates.

3. The generation method according to claim 1, further comprising:
obtaining a total number of the second nodes associated with the same condition in the attack tree, based on the tree structure information and the condition matching status information; and
determining, for each non-establishment condition candidate of the plurality of non-establishment condition candidates, the priority of the each non-establishment condition candidate such that the priority of the each non-establishment condition candidate becomes higher as the total number for each condition included in the each non-establishment condition candidate increases, and the priority becomes lower as the difficulty registered in the difficulty level information for the each condition decreases.

4. The generation method according to claim 3, wherein
an updated score is calculated such that the updated score becomes higher as the total number increases, and the updated score becomes lower as the difficulty registered in the difficulty level information decreases,
a priority determination score of the non-establishment condition candidate is obtained based on the updated score, and
the priority of each of the non-establishment condition candidates is determined according to the priority determination score.

5. A generation program for causing a computer to execute processing comprising:
receiving tree structure information, difficulty level information, and condition matching status information, the tree structure information being information that represents a structure of an attack tree that includes a first node associated with information that indicates an attack to be established and a plurality of second nodes hierarchically coupled to the first node and associated with conditions to establish the attack, the difficulty level information being information that indicates difficulty of response to make the conditions associated with the respective plurality of second nodes unsatisfied, the condition matching status information being information that indicates whether or not the plurality of second nodes is satisfied; and
generating, for each non-establishment condition candidate of a plurality of non-establishment condition candidate each of which is a combination by which the attack is not established among combinations of the conditions associated with the respective plurality of second nodes, provision information that indicates a priority of adoption of the non-establishment condition candidate based on the tree structure information, the difficulty level information, and the condition matching status information.

6. An information processing apparatus comprising a ranking unit configured to perform processing including:
receiving tree structure information, difficulty level information, and condition matching status information, the tree structure information being information that represents a structure of an attack tree that includes a first node associated with information that indicates an attack to be established and a plurality of second nodes hierarchically coupled to the first node and associated with conditions to establish the attack, the difficulty level information being information that indicates difficulty of response to make the conditions associated with the respective plurality of second nodes unsatisfied, the condition matching status information being information that indicates whether or not the plurality of second nodes is satisfied; and
generating, for each non-establishment condition candidate of a plurality of non-establishment condition candidate each of which is a combination by which the attack is not established among combinations of the conditions associated with the respective plurality of second nodes, provision information that indicates a priority of adoption of the non-establishment condition candidate based on the tree structure information, the difficulty level information, and the condition matching status information.
